# FASCICULE DE BREVET EUROPEEN

(11) **EP 2 452 987 B1**
(45) Date de publication et mention de la délivrance du brevet: **15.07.2020**
(21) Numéro de dépôt: 11009001.6
(22) Date de dépôt: 11.11.2011
(51) Int. Cl.: C09D 5/29, C09D 7/41, C04B 26/06

(54) **Enduit contenant un indicateur colore**
Putz, der einen pH-Indikator enthält
Plaster containing a pH indicator

(30) Priorité: 12.11.2010 FR 1004418
(43) Date de publication de la demande: 16.05.2012
(73) Titulaire: Toupret SA, 91100 Corbeil Essonnes (FR)
(72) Inventeur: Guillon, Daniel, 91100 Corbeil Essonnes (FR)
(74) Mandataire: Sabatier, Marc

(56) Documents cités:
- EP-A1- 0 629 452
- EP-A1- 2 038 235
- WO-A2-00/66508
- US-A1- 2005 143 505

## Description

La présente invention a pour objet un enduit de peinture amélioré, plus particulièrement un enduit en pâte en phase aqueuse tel que défini dans les revendications.

Le domaine de l'invention est celui des enduits de peinture.

Les enduits de peinture sont utilisés dans les travaux d'enduisage pour préparer les murs et plafonds à des travaux de finition décorative, par exemple peinture, peinture ou enduit à effets ou revêtements collés.

Les différents types d'enduisage sont :
∘ le rebouchage, qui est une opération discontinue destinée à combler les cavités ou les discontinuités de surface,
∘ le dégrossissage, qui est une opération continue ou discontinue pour combler les irrégularités, les bullages et les dégradations,
∘ le lissage, qui est une opération continue permettant d'obtenir un aspect lisse.

Ces différents types d'enduisage peuvent être réalisés en une ou plusieurs couches (dans le cas de plusieurs couches, on parle de redoublement) et des opérations de ponçage peuvent être nécessaires entre chaque couche et avant la finition.

Dans le cas d'un enduit de lissage ou de dégrossissage, l'épaisseur maximale déposable par couche varie de la couche la plus fine jusqu'à 5 mm, comme indiqué dans la norme NF T30-608. Pour les enduits de rebouchage, l'épaisseur n'est généralement pas limitée.

La principale difficulté avec les enduits de peinture est de déterminer le moment où l'enduit est suffisamment sec pour passer à l'opération suivante.

Les délais pour réaliser les différentes opérations qui suivent la dépose de la première couche d'enduit dépendent entre autres de l'épaisseur déposée, des conditions climatiques (température, humidité ambiante, ventilation) et de la nature du support. En ce qui concerne les produits disponibles sur le marché, soit ces délais sont mentionnés sous la forme de fourchettes relativement larges, soit ils ne sont pas précisés. Ils sont donc largement laissés à l'appréciation de l'applicateur. Le non respect des délais entre chaque opération peut faire apparaître dans des délais très variables des défauts tels que des résistances mécaniques trop faibles, des décollements (cloques) et des variations de couleur des revêtements de finition.

Il existe donc un besoin pour un moyen simple et fiable de déterminer si un enduit est suffisamment sec pour pourvoir être recouvert par une finition décorative, poncé ou redoublé.

Le but de la présente invention est de fournir un tel moyen par intégration d'un indicateur coloré particulier servant d'indicateur visuel de travaux dans un enduit de peinture en pâte en phase aqueuse. Cet indicateur coloré particulier permet de déterminer de façon simple et fiable en suivant le changement de couleur de l'enduit appliqué, les délais de recouvrement par une finition décorative, de ponçage et de redoublement. Il permet également de repérer les surfaces enduites.

On a déjà décrit des produits pour travaux contenant un indicateur coloré. Les brevets FR2903402 et EP2038235 concernent un enduit en poudre comprenant un colorant choisi de façon que, à l'état de poudre sèche, l'enduit soit d'une première couleur, qu'il prenne une autre couleur au contact de l'eau utilisée lors d'un gâchage dudit enduit et qu'il soit de nouveau de la première couleur après séchage de l'enduit. L'indicateur coloré est la phénolphtaléine ou la thymolphtaléine.

Les demandes US2005/0143505 et US2007/0100035 décrivent des peintures à base de latex comprenant un additif indicateur coloré sensible au pH choisi parmi le rouge de phénol et les sels alcalins et alcalino-terreux de la phénolsulfone phtaléine.

Selon l'invention, on intègre dans un enduit de peinture en pâte en phase aqueuse un indicateur coloré utilisé comme indicateur de suivi de travaux, qui est la phénolsulfone phtaléine (PSP).

La perte d'eau d'un enduit de peinture en pâte, par absorption de l'eau par le support et par évaporation, provoque une diminution des ions OH⁻, donc une diminution du pH. Le changement progressif de la couleur de l'enduit est une indication de la diminution du pH et donc de la diminution de la quantité d'eau présente dans l'enduit.

Ainsi, le changement de couleur de l'enduit donne une indication sur la perte d'eau donc sur l'avancement du séchage.

Dans la présente description,
∘ le terme enduit est utilisé pour désigner un enduit de peinture.
∘ le terme indicateur coloré est utilisé pour désigner un indicateur coloré de pH ou indicateur acide-base, c'est-à-dire un produit changeant de couleur en fonction du pH de son milieu environnant.
∘ le terme indicateur de suivi de travaux est utilisé pour désigner
   □ Un indicateur de séchage : Le changement de couleur de l'enduit, contenant l'indicateur coloré utilisé comme indicateur de suivi de travaux, indique que l'enduit est suffisamment sec, selon les normes NF P 74-201-1 et NF P 74-204-1, pour être recouvert par une finition décorative.
   □ Un indicateur de ponçage ou de redoublement : Le changement de couleur de l'enduit, contenant l'indicateur coloré utilisé comme indicateur de suivi de travaux, indique que l'enduit est suffisamment sec pour que l'on puisse le poncer et/ou déposer une autre couche d'enduit (redoublement).
   □ Un indicateur permettant de suivre la dépose d'un enduit sur un support : L'enduit contenant l'indicateur coloré utilisé comme indicateur de suivi de travaux est teinté, ce qui permet de visualiser de manière précise les zones déjà enduites.

Dans le tableau ci-dessous, on a comparé les valeurs de la zone de virage pour 3 indicateurs colorés pouvant être utilisés dans des produits pour travaux, notamment dans des enduits de peinture pour travaux intérieurs. Ces valeurs concernent des solutions aqueuses contenant l'indicateur coloré.

| Indicateur coloré | Couleur | Zone de pH de virage | | Couleur |
|---|---|---|---|---|
| PPT | Incolore | 8,3 | 10 | Rose |
| TPT | Incolore | 9,3 | 10,5 | Bleu |
| PSP | Jaune | 6,7 | 8,3 | Rouge |

| | | | | |
|---|---|---|---|---|
| PPT = phénolphtaléine TPT = thymolphtaléine | | | | |

Dans le cas de la PSP, la zone de virage est en moyenne comprise entre un pH de 6,7 et un pH de 8,3. La forme acide donne une couleur jaune, la zone de virage est un mélange de jaune et de rouge, la forme alcaline donne une couleur rouge. En faible concentration, la forme alcaline est rose et la forme acide est jaune très claire.

Il est important de noter que dans une pâte épaisse opaque de couleur blanche, les zones de pH de virage seront différentes de celles observées dans des liquides limpides. Il faut en fait décaler les pH vers des valeurs plus élevées pour obtenir des teintes plus intenses nécessaires pour colorer des pâtes épaisses opaques.

On a cherché à déterminer le pH minimal permettant d'observer une coloration dans un enduit en pâte contenant un indicateur coloré.

On a utilisé des enduits de peinture en pâte en phase aqueuse dont la couleur d'origine est blanche, avec des variantes beige ou grise. On a observé les changements de couleur en présence d'indicateur coloré. Les résultats sont indiqués dans le tableau ci-dessous.

Les essais ont été réalisés sur la formule type enduit de lissage (EL) objet de l'exemple 1 ci-après.

| Indicateur coloré | % en masse d'indicateur coloré | pH minimal | Couleur de la pâte |
|---|---|---|---|
| PPT | 0,018 | 9,5 | rose |
| TPT | 0,018 | 11,4 | bleu |
| PSP | 0,0005 | 7,6 | rose |

Le seuil de pH pour obtenir une coloration est le plus bas avec la PSP.

Dans le cas d'un enduit blanc en pâte, la PSP a la particularité de changer de couleur dès que le pH est inférieur à 7,6, soit à un pH très largement inférieur à celui des indicateurs courants, tels que la PPT et la TPT, comme indiqué dans le tableau ci-dessus.

Dans le cas de la PPT, le changement de couleur se produit dès que le pH est inférieur à 9,5 et dans le cas de la TPT, il se produit dès que le pH est inférieur à 11,4.

Dans un enduit en pâte en phase aqueuse ayant un pH supérieur ou égal à 7,6, la forme alcaline de la PSP prédomine et la pâte est colorée en rose.

Le changement progressif de la couleur de l'enduit du rose au mélange rose/jaune jusqu'au jaune très clair est une indication de la diminution du pH et donc d'une diminution de la quantité d'eau présente dans l'enduit.

Lorsque l'eau est totalement éliminée, la PSP cristallise sous forme de cristaux jaunes en donnant une très faible coloration jaune à l'enduit qui n'est pas gênante pour la suite des travaux.

Les enduits contenant de la PSP devront avoir un pH supérieur à 7,6 pour obtenir une coloration suffisamment intense permettant de donner des indications visuelles fiables.

La zone de pH optimale pour un enduit contenant de la PSP est de 7,6 à 10, et de préférence de 8,5 à 9.

Dans certains cas, au delà d'un pH égal à 9, le changement de couleur n'est pas total au moment du séchage complet de l'enduit.

Ce phénomène est lié à l'épaisseur d'enduit appliquée, à la nature du support d'application, aux conditions de séchage et à la quantité de PSP présente dans l'enduit.

Aussi, dans le cas où l'enduit est déposé en une épaisseur supérieure à 1 mm et où le séchage est lent, il sera préférable de réduire la dose de PSP ou de réduire la dose de PSP et le pH pour obtenir de meilleures indications visuelles.

Pour obtenir un pH optimal de l'enduit contenant un indicateur coloré, on ajoutera de préférence un agent régulateur de pH à l'enduit.

Les régulateurs de pH les plus couramment utilisés dans les formules d'enduits de peinture en pâte en phase aqueuse sont l'ammoniaque, la soude, les amines et la chaux aérienne. On utilisera, comme amine, de préférence le produit AMP 90, qui est un mélange constitué de 90% de 2-amino-2-méthyl-1-propanol et de 10% d'eau (Producteur : Angus Chemical/Dow - Buffalo Grove - USA).

Pour obtenir de bonnes indications visuelles, il est nécessaire que la coloration rose de l'enduit soit suffisamment intense. On utilisera donc une quantité de PSP comprise entre 0,0001% et 0,001%, de préférence entre 0,0002 et 0,0005%.

La PSP est soluble en milieu aqueux et elle peut migrer vers la surface de l'enduit au cours du séchage ce qui allonge le délai de changement de couleur.

Cette migration est proportionnelle à l'épaisseur de l'enduit et elle est plus importante lorsque l'enduit est appliqué sur des supports peu absorbants, par exemple des anciennes peintures.

Pour des enduits pouvant être appliqués sur des supports peu absorbants à des épaisseurs supérieures à 1 mm, il sera préférable d'utiliser un dosage en PSP de préférence entre 0,0002 et 0,0003%. En effet, si la quantité de PSP est trop élevée, il existe un risque important de décoloration tardive ou même de non décoloration.

Les enduits en pâte en phase aqueuse selon l'invention sont des enduits classiques. La composition typique est mentionnée ci-dessous, les quantités sont exprimées en pourcentage en masse, en matières sèches.

| Ingrédient | % en masse |
|---|---|
| eau totale | 15 à 45 |
| liants organiques d'origine animale, végétale ou pétrolière | 0,5 à 35 |
| charges minérales | 30 à 80 |
| charges allégées minérales, organiques naturelles ou synthétiques | 0 à 10 |
| charges lamellaires minérales ou organiques | 0 à 10 |
| fibres naturelles ou synthétiques | 0 à 10 |
| additifs minéraux, organiques naturels ou synthétiques | 0,01 à 10 |

A titre de liant organique d'origine animale, végétale ou pétrolière, on utilise par exemple des protéines animales, des dérivés d'amidon et/ou des polymères vinyliques.

Des exemples de charges minérales comprennent le carbonate de calcium, le carbonate de calcium et magnésium, le sable et/ou le sable broyé.

On utilise comme charges minérales allégées des minéraux expansés, des microsphères et/ou des polymères expansés.

Les additifs minéraux, organiques naturels ou synthétiques utilisés dans les enduits selon l'invention sont des additifs usuels. Ils sont choisis notamment parmi les agents anticorrosion, antigel, antimousse, antisalissure, biocide, coalescent, colorant, dispersant, épaississant, hydrophobe, modificateur de rhéologie, mouillant, oléophobe, opacifiant, parfum, pigment, plastifiant, régulateur de pH, rétenteur d'eau, siccatif, à effet décoratif et/ou à effet photocatalytique.

L'invention sera illustrée plus en détail par les exemples suivants, donnés à titre illustratif et non limitatif.

Les exemples 1 à 3 concernent des enduits de lissage, de dégrossissage et de rebouchage selon l'invention. Les exemples 4 à 7 donnent les résultats d'essais comparatifs et de tests avec les enduits des exemples 1 à 3.

### Exemple 1 - Enduit de lissage (EL)

Un exemple préféré d'enduit de lissage est donné ci-dessous

| Constituant | Fonction | % en masse |
|---|---|---|
| Eau | Solvant | 24 |
| Ether de cellulose - Cellosize QP100 MH | Epaississant/rétenteur d'eau | 0,5 |
| Polyacrylate de sodium - Coadis P50 | Dispersant | 0,3 |
| Huile minérale - Dapro 7015 | Antimousse | 0,3 |
| Isothiazolinone - Mergal 723K | Biocide | 0,15 |
| Copolymère styrène-acrylique - Acronal S716 | Liant | 2,5 |
| TPI* - Ucar Filmer IBT | Agent de coalescence | 0,15 |
| Carbonate de calcium - Béatite 12 | Charge | 71,75 |
| Copolymère acrylique - Thixol 53 L | Epaississant | 0,35 |

| | | |
|---|---|---|
| TPI* = isobutyrate de triméthylpentanediol | | |

On a ajouté à cet enduit 0,0005% en masse de PSP en tant qu'indicateur coloré.

On a ajouté un régulateur de pH, choisi parmi la chaux aérienne, la soude en solution, l'AMP90 et l'ammoniaque, en une quantité telle que le pH de l'enduit après 7 jours de stockage soit compris dans la fourchette de pH préférentielle de 8,5 à 9. Les quantités de régulateur nécessaires pour obtenir un pH de 8,9 après 7 jours de stockage sont données ci-dessous.

| Régulateur de nH | Quantité |
|---|---|
| Chaux aérienne CL 90 | 0,005 à 0,020% |
| Soude en solution 1N | 0,05 à 0,40% |
| AMP90 | 0,007 à 0,04% |
| Ammoniaque à 10% | 0,04 à 0,15% |

### Exemple 2 - Enduit de dégrossissage (ED)

Un exemple préféré d'enduit de dégrossissage est donné ci-dessous

| Constituant | Fonction | % en masse |
|---|---|---|
| Eau | Solvant | 23,5 |
| Ether de cellulose - Cellosize QP100 MH | Epaississant/rétenteur d'eau | 0,5 |
| Polyacrylate de sodium - Coadis P50 | Dispersant | 0,2 |
| Huile minérale - Dapro 7015 | Antimousse | 0,3 |
| Isothiazolinone - Mergal 723K | Biocide | 0,15 |
| Copolymère styrène-acrylique - Acronal S716 | Liant | 3 |
| TPI* - Ucar Filmer IBT | Agent de coalescence | 0,15 |
| Carbonate de calcium - Béatite 30 | Charge | 49,8 |
| Carbonate de calcium - Durcal 65 | Charge | 22 |
| Copolymère acrylique - Thixol 53 L | Epaississant | 0,4 |

| | | |
|---|---|---|
| TPI* = isobutyrate de triméthylpentanediol | | |

On a ajouté à cet enduit 0,0005% en masse de PSP en tant qu'indicateur coloré.

On a ajouté à l'enduit 0,05 à 0,40% de soude en solution 1N ; le pH de l'enduit de dégrossissage après 7 jours de stockage était égal à 8,6.

### Exemple 3 - Enduit de rebouchage (ER)

Un exemple préféré d'enduit de rebouchage est donné ci-dessous

| Constituant | Fonction | % en masse |
|---|---|---|
| Eau | Solvant | 27 |
| Ether de cellulose - Cellosize QP100 MH | Epaississant/rétenteur d'eau | 0,5 |
| Polyacrylate de sodium - Coadis P50 | Dispersant | 0,2 |
| Huile minérale - Dapro 7015 | Antimousse | 0,3 |
| Isothiazolinone - Mergal 723K | Biocide | 0,15 |
| Copolymère styrène-acrylique - Acronal S716 | Liant | 3 |
| TPI* - Ucar Filmer IBT | Agent de coalescence | 0,15 |
| Carbonate de calcium - Béatite 30 | Charge | 65,2 |
| Perlite expansée - E75 | Charge légère | 3 |
| Copolymère acrylique - Thixol 53 L | Epaississant | 0,5 |

| | | |
|---|---|---|
| TPI* = isobutyrate de triméthylpentanediol | | |

On a ajouté à cet enduit 0,0005% en masse de PSP en tant qu'indicateur coloré.

On a ajouté à l'enduit 0,05 à 0,40% de soude en solution 1N ; le pH de l'enduit de dégrossissage après 7 jours de stockage était égal à 8,5.

### Exemple 4 - Essai comparatif - Indicateurs colorés

Dans cet exemple, on a comparé les résultats obtenus avec l'enduit de lissage de l'exemple 1, contenant de la soude 1N en tant que régulateur de pH, et le même enduit contenant comme indicateur coloré de la phénolphtaléine (PPT) ou de la thymolphtaléine (TPT).

Les différents enduits ont été appliqués sur une plaque de plâtre à épiderme cartonné brute. Les applications ont été réalisées à l'aide de gabarits en acier inoxydable garantissant une épaisseur constante sur toute la surface enduite. On a testé deux épaisseurs pour la couche d'enduit : 1 mm et 2 mm.

Les conditions de séchage étaient les suivantes : Séchage en ambiance contrôlée avec une température égale à 20 ± 1°C et une humidité relative égale à 50 ± 5%. L'humidité de l'enduit a été mesurée par séchage à l'étuve à 105°C sur des échantillons prélevés par carottage sur toute l'épaisseur de la couche d'enduit.

En accord avec les normes NF P 74-201-1 et NF P 74-204-1, "chapitre 5-1 Qualité des subjectiles", un enduit présentant une humidité inférieure à 5% en masse a été considéré comme prêt à être recouvert par une finition décorative.

Lorsque l'humidité au changement de couleur est supérieure à 5%, on remarque, lors du carottage, que l'enduit est décoloré en surface mais qu'il n'est pas décoloré sur toute l'épaisseur.

Les résultats sont indiqués dans le tableau ci-dessous

| | Enduit de lissage EL avec soude 1N | | | | | |
|---|---|---|---|---|---|---|
| Indicateur coloré | PSP (0,0005%) | | PPT (0,018%) | | TPT (0,018%) | |
| pH ajusté avec soude 1N | 8,9 | | 10,4 | | 11,7 | |
| Couleur à t = 0 | Rose | | Rose | | Bleu | |

| Epaisseur en mm | 1 | 2 | 1 | 2 | 1 | 2 |
|---|---|---|---|---|---|---|
| Délai de changement de couleur | 3h30 à 4h | 7h à 8h | 1h20 à 1h40 | 2h30 à 3h | 10 à 20 min | 20 à 40 min |
| Humidité à t = 0 en % | 25,2 | 25,2 | 25,3 | 25,3 | 25,6 | 25,6 |
| Humidité au changement de couleur en % | 4,6 | 7,5 | 16,4 | 16,3 | 23,5 | 23,4 |

En conclusion, on constate que
✔ pour la PSP, le changement de couleur indique que l'enduit déposé en 1 mm d'épaisseur est sec, c'est-à-dire que le recouvrement par une finition décorative est possible, l'enduit est ponçable et le redoublement est possible.
✔ pour la PSP, le changement de couleur indique que l'enduit déposé en 2 mm d'épaisseur ne peut pas être considéré comme sec, mais qu'il est ponçable jusqu'à l'apparition de la couleur rose et que le redoublement est possible.
✔ Pour la PPT et la TPT, le changement de couleur indique une perte d'eau, mais les taux d'humidité sont de 2 à 5 fois supérieurs à ceux mesurés avec la PSP.
✔ La PPT et la TPT changent de couleur après un délai trop court. Le changement de couleur ne peut donc pas être utilisé comme indicateur de suivi de travaux.

On a également testé un certain nombre d'enduits de peinture en pâte en phase aqueuse disponibles sur le marché en ajoutant comme indicateur coloré de la phénolsulfone phtaléine (PSP), de la phénolphtaléine (PPT) ou de la thymolphtaléine (TPT).

Les essais ont montré que
✔ La PSP est active dans une zone de pH qui correspond à celle de la majorité des produits commerciaux, contrairement à la PPT et à la TPT.
✔ Les résultats obtenus avec les enduits contenant de la PSP sont satisfaisants pour des enduits de 1 mm et 2 mm d'épaisseur.

### Exemple 5 - Test enduit de dégrossissage

Dans cet exemple, on a testé l'enduit de dégrossissage de l'exemple 2, contenant de la soude 1N en tant que régulateur de pH. Cet enduit de couleur rose présentait un pH égal à 8,6. L'enduit a été appliqué sur une plaque de plâtre à épiderme cartonné brute comme mentionné dans l'exemple 4. On a testé trois épaisseurs pour la couche d'enduit : 1 mm, 2 mm et 5 mm.

Les résultats sont indiqués dans le tableau ci-dessous

| Epaisseur en mm | 1 | 2 | 5 |
|---|---|---|---|
| Délai de changement de couleur | 3h30 à 4h | 6h30 à 7h30 | 14h à 17h |
| Humidité au changement de couleur en % | 4,7 | 6,9 | 9,6 |
| Indications fournies par le changement de couleur | Enduit sec, ponçable, redoublement possible, recouvrement par une finition décorative possible | Enduit ponçable jusqu'à l'apparition de la couleur rose, Redoublement possible | |

### Exemple 6 - Test enduit de rebouchage

Dans cet exemple, on a testé l'enduit de rebouchage de l'exemple 3, contenant de la soude 1N en tant que régulateur de pH. Cet enduit de couleur rose présentait un pH égal à 8,5.

L'enduit a été appliqué sur une plaque de plâtre à épiderme cartonné brute comme mentionné dans l'exemple 4. On a testé trois épaisseurs pour la couche d'enduit : 1 mm, 2 mm et 5 mm.

| Epaisseur en mm | 1 | 2 | 5 |
|---|---|---|---|
| Délai de changement de couleur | 3h30 à 4h | 7h à 8h | 13h à 16h |
| Humidité au changement de couleur en % | 4,2 | 10,1 | 13,5 |
| Indications fournies par le changement de couleur | Enduit sec, ponçable, redoublement possible, recouvrement par une finition décorative possible | Enduit ponçable jusqu'à l'apparition de la couleur rose, Redoublement possible | |

### Exemple 7 - Essai comparatif des régulateurs de pH

Cet essai comparatif a été réalisé avec l'enduit de lissage de l'exemple 1. On a testé comme agent régulateur de pH la chaux aérienne (enduit EL1), la soude 1N (enduit EL2), le produit AMP 90, mélange constitué de 90% de 2-amino-2-méthyl-1-propanol et de 10% d'eau (enduit EL3) et l'ammoniaque (enduit EL4). Les enduits contenaient 0,0005% de PSP. Tous les enduits étaient roses au temps t = 0 et présentaient un pH égal à 8,9.

Les différents enduits ont été appliqués sur une plaque de plâtre à épiderme cartonné brute comme mentionné dans l'exemple 4. On a testé deux épaisseurs pour la couche d'enduit : 1 mm et 2 mm.

Les changements de couleur ont été contrôlés visuellement. Un spectrocolorimètre Minolta CM 503-d, utilisant le système de mesure décrit ci-après a permis de confirmer les contrôles visuels.

On a utilisé le modèle de représentation des couleurs CIE L*a*b*. Ce système caractérise une couleur à l'aide d'un paramètre d'intensité correspondant à la luminance (L*) et de deux paramètres de chrominance (a* et b*) qui décrivent la couleur. La composante L* est la clarté, qui va de 0 (noir) à 100 (blanc). La composante a* représente la gamme de l'axe rouge (valeur positive) à vert (valeur négative) en passant par le blanc (0) si la clarté vaut 100. La composante b* représente la gamme de l'axe jaune (valeur positive) à bleu (valeur négative) en passant par le blanc (0) si la clarté vaut 100.

Les données L*a*b* pour l'enduit en pâte EL2 étaient les suivantes L* = 85,46 ; a* = 7,24 ; b* = -5,45.

Les résultats sont indiqués dans le tableau ci-dessous.

| Enduit | EL1 | | EL2 | | EL3 | | EL4 | |
|---|---|---|---|---|---|---|---|---|
| Epaisseur, mm | 1 | 2 | 1 | 2 | 1 | 2 | 1 | 2 |
| Délai de changement de couleur | 3h30 à 4h | 7h à 8h | 3h30 à 4h | 7h à 8h | 3h30 à 4h | 7h à 8h | 3h à 3h30 | 5h à 6h |

| L*a*b* au changement de couleur | | | | | | | | |
|---|---|---|---|---|---|---|---|---|
| L* | | | 91,84 | 91,33 | | | | |
| a* | | | 0,72 | 1,57 | | | | |
| b* | | | 0,85 | 0,24 | | | | |

Au changement de couleur, a* et b* tendent vers zéro et L* augmente, ce qui signifie que la couleur rose disparaît au profit d'un léger jaune car b* devient positif. Les mesures de L*a*b* ont permis de confirmer les observations visuelles.

On constate que
✔ L'ammoniaque donne des délais de changement de couleur plus courts.
✔ La chaux, la soude et l'AMP90 donnent des délais de changement de couleur identiques.

En conclusion, en tant qu'ajusteur de pH, on utilisera de préférence la soude en solution aqueuse car elle ne dégage aucune odeur, elle est bon marché et facile à manipuler.

Les exemples ci-dessus ont montré que
✔ L'humidité résiduelle de l'enduit contenant de la PSP, au moment du changement de couleur, est très inférieure à celles obtenues avec la PPT et la TPT.
✔ Le changement de couleur de la PSP permet d'obtenir des informations utiles pour l'avancement des travaux. En fonction de l'épaisseur de l'enduit, il indique les délais de recouvrement par une finition décorative, de ponçage et/ou de redoublement.
✔ La plupart des enduits de peinture en pâte en phase aqueuse ont des pH situés dans la zone de virage de la PSP. La PSP peut donc être utilisée comme indicateur de suivi de travaux dans pratiquement tous les enduits sans modification des formulations.
✔ Etant donné que le pH des enduits contenant de la PSP est faible, il n'est pas nécessaire d'apposer un étiquetage de danger "C-corrosif", imposé quand le pH dépasse 11,5.
✔ Quel que soit le type de support, le type d'enduit utilisé et l'épaisseur déposée, la PSP peut être utilisée comme indicateur de dépose de l'enduit.
✔ Les travaux réalisables après changement de couleur des enduits contenant de la PSP sont les suivants
   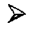 Pour un enduit d'une épaisseur inférieure ou égale à 1 mm, le changement de couleur indique un séchage suffisant, selon les normes NF P T 74-201-1 et NF P T 74-204-1, pour réaliser un recouvrement par une finition décorative, un ponçage, un redoublement.
   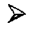 Pour un enduit d'une épaisseur supérieure à 1 mm et inférieure ou égale à 5 mm, le changement de couleur indique un séchage suffisant pour réaliser un ponçage ou un redoublement.

## Revendications

1. Enduit de peinture en pâte en phase aqueuse comprenant un indicateur coloré utilisé comme indicateur de suivi de travaux, **caractérisé en ce que** l'indicateur coloré est de la phénolsulfone phtaléine et **en ce que** l'enduit présente un pH compris entre 7,6 et 10 et contient 0,0001 à 0,001 % de phénolsulfone phtaléine.

2. Enduit de peinture en pâte en phase aqueuse selon la revendication 1, **caractérisé en ce qu'**il présente un pH compris entre 8,5 et 9.

3. Enduit de peinture en pâte en phase aqueuse selon la revendication 1 ou 2 **caractérisé en ce qu'**il contient 0,0002 à 0,0005% de phénolsulfone phtaléine.

4. Enduit de peinture en pâte en phase aqueuse selon l'une quelconque des revendications 1 à 3, **caractérisé en ce qu'**il contient en outre un agent régulateur du pH.

5. Enduit de peinture en pâte en phase aqueuse selon la revendication 4, **caractérisé en ce que** l'agent régulateur du pH est la soude en solution aqueuse, la chaux aérienne, le 2-amino-2-méthyl-1-propanol ou l'ammoniaque.

6. Utilisation d'un enduit selon l'une quelconque des revendications précédentes, appliqué en une épaisseur inférieure ou égale à 1 mm, **caractérisée en ce que** le changement de couleur de la phénolsulfone phtaléine est un indicateur de séchage dudit enduit.

7. Utilisation d'un enduit selon l'une quelconque des revendications 1 à 5, appliqué en une épaisseur inférieure ou égale à 5 mm, **caractérisée en ce que** le changement de couleur de la phénolsulfone phtaléine est un indicateur de ponçage ou de redoublement dudit enduit.

8. Utilisation de la phénolsulfone phtaléine comme indicateur de suivi de travaux dans un enduit de peinture en pâte en phase aqueuse où l'enduit présente un pH compris entre 7,6 et 10 et contient 0,0001 à 0,001 % de phénolsulfone phtaléine.

## Patentansprüche

1. Pastenförmiges Anstrichmittel in wässriger Phase, einen farbigen Indikator enthaltend, der als Schichtfolgenindikator verwendet wird, **dadurch gekennzeichnet, dass** der farbige Indikator Phenolsulfonphthalein ist und dadurch, dass das Anstrichmittel einen pH-Wert zwischen 7,6 und 10 hat und 0,0001 bis 0,001% Phenolsulfonphthalein enthält.

2. Pastenförmiges Anstrichmittel in wässriger Phase nach Patentanspruch 1, **dadurch gekennzeichnet, dass** es einen pH-Wert zwischen 8,5 und 9 hat.

3. Pastenförmiges Anstrichmittel in wässriger Phase nach Patentanspruch 1 oder 2, **dadurch gekennzeichnet, dass** es 0,0002 bis 0,0005% Phenolsulfonphthalein enthält.

4. Pastenförmiges Anstrichmittel in wässriger Phase nach irgendeinem der Patentansprüche 1 bis 3, **dadurch gekennzeichnet, dass** es außerdem einen pH-Regulator enthält.

5. Pastenförmiges Anstrichmittel in wässriger Phase nach Patentanspruch 4, **dadurch gekennzeichnet, dass** der pH-Regulator Soda in wässriger Lösung, Luftkalk, 2-Amino-2-methyl-1-propanol oder Ammoniak ist.

6. Gebrauch eines Anstrichmittels nach irgendeinem der vorangehenden Patentansprüche, aufgetragen in einer Dicke kleiner oder gleich 1 mm, **dadurch gekennzeichnet, dass** der Farbwechsel des Phenolsulfonphthaleins ein Trocknungsindikator des genannten Anstrichmittels ist.

7. Gebrauch eines Anstrichmittels nach irgendeinem der Patentansprüche 1 bis 5, aufgetragen in einer Dicke kleiner oder gleich 5 mm, **dadurch gekennzeichnet, dass** der Farbwechsel des Phenolsulfonphthaleins ein Indikator für Schleifen oder Überstreichen des genannten Anstrichmittels ist.

8. Gebrauch von Phenolsulfonphthalein als Schichtfolgenindikator in einem pastenförmigen Anstrichmittel in wässriger Phase, wobei das Anstrichmittel einen pH-Wert zwischen 7,6 und 10 hat und 0,0001 bis 0,001% Phenolsulfonphthalein enthält.

## Claims

1. Paste paint coating in aqueous phase comprising a color indicator used as a work monitoring indicator, **characterized in that** the color indicator is phenolsulfonephthalein and **in that** the coating has a pH comprised between 7,6 and 10 and contains 0.0001 to 0.001% of phenolsulfonephthalein.

2. The paste paint coating in aqueous phase according to claim 1, **characterized in that** it has a pH comprised between 8.5 and 9,

3. The paste paint coating in aqueous phase according to claim 1 or 2 **characterized in that** it contains 0.0002 to 0.0005% of phenolsulfonephthalein,

4. The paste paint coating in aqueous phase according to any one of claims 1 to 3, **characterized in that** it further contains a pH-regulating agent.

5. The paste paint coating in aqueous phase according to claim 4, **characterized in that** the pH-regulating agent is sodium hydroxide in aqueous solution, air lime, 2-amino-2-methyl-1-propanol or ammonia,

6. Use of a coating according to any one of the preceding claims, applied in a thickness less than or equal to 1 mm, **characterized in that** the change in color of the phenolsulfonephthalein is an indicator of the drying of said coating.

7. Use of a coating according to any one of claims 1 to 5, applied in a thickness less than or equal to 5 mm, **characterized in that** the change in color of the phenolsulfonephthalein is an indicator of sanding or repeating of said coating.

8. Use of phenolsulfonephthalein as a work monitoring indicator in a paste paint coating in aqueous phase where the coating has a pH comprised between 7.6 and 10 and contains 0.0001 to 0.001% of phenolsulfonephthalein.
